# EUROPÄISCHE PATENTSCHRIFT

(11) **EP 3 531 037 B1**
(45) Veröffentlichungstag und Bekanntmachung des Hinweises auf die Patenterteilung: **24.11.2021**
(21) Anmeldenummer: 19158539.7
(22) Anmeldetag: 21.02.2019
(51) Int. Cl.: F24F 13/14, F24F 11/74, F24F 110/40, G01F 1/40, G01F 1/46

(54) **LUFTTECHNISCHE EINRICHTUNG ZUR VERWENDUNG IN EINER KLIMATECHNISCHEN ANLAGE**
VENTILATION DEVICE FOR USE IN AN AIR CONDITIONING SYSTEM
AGENCEMENT AÉRAULIQUE DESTINÉ À ÊTRE UTILISÉ DANS UNE INSTALLATION TECHNIQUE DE CLIMATISATION

(30) Priorität: 23.02.2018 DE 202018101015 U
(43) Veröffentlichungstag der Anmeldung: 28.08.2019
(73) Patentinhaber: TROX GmbH, 47506 Neukirchen-Vluyn (DE)
(72) Erfinder: LEITNER, Daniel, 47918 Tönisvorst (DE); STEINHAUSEN, Hannah, 45468 Mülheim (DE)
(74) Vertreter: Dr. Stark & Partner Patentanwälte mbB

(56) Entgegenhaltungen:
- EP-A1- 2 669 592
- EP-A2- 1 980 798
- WO-A1-01/75374

## Beschreibung

Die Erfindung betrifft eine lufttechnische Einrichtung zur Verwendung in einer klimatechnischen Anlage mit einem, vorzugsweise einen runden oder einen viereckigen Strömungsquerschnitt aufweisenden, Gehäuse, mit einem um eine Schwenkachse schwenkbar gelagerten sowie zwei Klappenflächen aufweisenden Klappenblatt, und mit einer Vorrichtung mit zumindest einer Messstelle zur Bestimmung des Druckes eines gasförmigen, in dem Gehäuse strömenden Mediums M, wobei das Klappenblatt wenigstens eine, vorzugsweise auf zumindest einer Klappenfläche angeordnete, Entnahmestelle aufweist, die mit der Messstelle verbunden ist.

Entsprechende lufttechnische Einrichtungen sind beispielsweise als Volumenstromregler, die beispielsweise mechanisch selbsttätig arbeitend sind oder die eine regelungstechnische Einheit bestehend aus Transmitter, Antrieb und Regeleinrichtung aufweisen, ausgebildet. Bei bekannten Einrichtungen ist der Transmitter außerhalb des Gehäuses an der Außenseite des Gehäuses ortsfest befestigt oder direkt auf dem Klappenblatt verschraubt. Eine Montage des Transmitters direkt auf dem Klappenblatt macht einen Austausch des Transmitters nahezu unmöglich. Bei einer Verschlauchung gestalten sich Reinigungsarbeiten aufwändiger, da die Schläuche, die die betreffende Hohlkammer mit dem Transmitter verbinden, eine größere Länge aufweisen. Auch können die Schläuche, über die der Transmitter mit den Messstellen des Klappenblattes verbunden ist, bei der Montage vertauscht werden. In dem Gehäuse frei verlegte Schläuche stellen ein Risiko für die Hygiene dar.

Aus der EP 2 669 592 A1 ist eine lufttechnische Einrichtung zur Verwendung in einer klimatechnischen Anlage gemäß dem Oberbegriff von Anspruch 1 bekannt. Die WO 01/75374 A1 beschreibt eine in Klappen einer Drossel integrierte auf Druck basierende Vorrichtung zur Messung eines Stroms.

Aufgabe der Erfindung ist es, die vorgenannten Nachteile zu vermeiden und eine lufttechnische Einrichtung anzugeben, die beispielweise zu Zwecken der einfacheren Montage und der einfacheren Reinigung konstruktiv einfacher ausgestaltet ist.

Diese Aufgabe wird durch eine lufttechnische Einrichtung mit den Merkmalen von Anspruch 1 gelöst. Bevorzugte Ausführungsformen sind in den abhängigen Ansprüchen definiert. Erfindungsgemäß ist dabei vorgesehen, dass

| | |
|---|---|
| entweder | zumindest ein Ende der Schwenkachse durch eine in dem Gehäuse befindliche und in der Flucht der Schwenkachse befindliche Gehäuseöffnung von außerhalb des Gehäuses zugänglich ist, wobei zumindest eine Messstelle, vorzugsweise jede Messstelle, mit einem Transmitter verbunden ist, der an dem von außerhalb des Gehäuses zugänglichen Endes der Schwenkachse angeordnet und dass der Transmitter drehfest an dem Ende der Schwenkachse befestigt ist, |
| oder aber | zumindest ein Ende der Schwenkachse durch eine in dem Gehäuse befindliche Gehäuseöffnung außenseitig aus dem Gehäuse hinausragt, wobei zumindest eine Messstelle, vorzugsweise jede Messstelle, mit einem Transmitter verbunden ist, der an dem aus dem Gehäuse hinausragenden Ende der Schwenkachse angeordnet und dass der Transmitter drehfest an dem Ende der Schwenkachse befestigt ist. |

Die erfindungsgemäße lufttechnische Einrichtung zeichnet sich durch eine hohe Kompaktheit aus, da der Transmitter direkt an dem Ende der Schwenkachse angeordnet ist. Gleichwohl ist eine leichte Trennbarkeit von Transmitter und Schwenkachse gewährleistet, um eine schnelle und einfache Demontage beispielsweise für eine Reinigung durchführen zu können. Die erfindungsgemäße Ausgestaltung erlaubt eine einfache Aufnahme des Druckes in dem Gehäuse oder eines anderen druckäquivalenten Signals. Sofern beispielsweise nur der statische Druck bestimmt werden soll, reicht eine Messstelle aus. Der Transmitter wandelt eine Eingangsgröße nach einer festen Beziehung in eine Ausgangsgröße um. Ein als Drucktransmitter ausgebildeter Transmitter wandelt ein pneumatisches Signal in ein elektrisches Signal um. Insoweit hat ein Drucktransmitter entsprechende pneumatische Anschlüsse für die Messstelle(n) und einen elektrischen Anschluss. Mittels des elektrischen Anschlusses kann der Transmitter beispielsweise an eine Anzeigeeinrichtung oder an eine Regeleinrichtung angeschlossen werden. In einem Transmitter kann - sofern zwei Messstellen vorgesehen sind - der Differenzdruck bestimmt werden. Ein Transmitter kann beispielsweise einen integrierten piezoresistiven Druckaufnehmer, wie beispielsweise eine Monosilikonschicht als Messelement, aufweisen. Bei Druckbeaufschlagung wird die Monosilikonschicht ausgelenkt und generiert ein Spannungssignal. Dieses Spannungssignal kann dann an eine Anzeigeeinrichtung oder an eine Regeleinrichtung weitergeleitet werden. Bei einer Entnahmestelle kann es sich beispielsweise um eine Ausnehmung oder ein Loch handeln. Selbstverständlich sind auch andere geeignete Ausgestaltungen denkbar.

Zumindest eine Messstelle, vorzugsweise jede Messstelle kann durch eine im Bereich der Stirnseite des besagten Endes der Schwenkachse angeordnete Entnahmeöffnung gebildet sein, und der Transmitter kann zumindest ein, vorzugsweise rohrförmig ausgebildetes und in der Montageposition endseitig in die jeweilige korrespondierende Entnahmeöffnung hineinragendes, Kupplungselement aufweisen. Bei einer solchen Ausgestaltung fungiert das Ende der Schwenkachse als eine Art Steckdose, in die der einem Stecker ähnelnde Transmitter eingeführt wird. Selbstverständlich ist auch eine umgekehrte Anordnung denkbar. So kann der Transmitter beispielsweise zwei Entnahmeöffnungen aufweisen, und jede Messstelle kann im Bereich der Stirnseite des besagten Endes der Schwenkachse zwei, vorzugsweise rohrförmig ausgebildete und in der Montageposition endseitig in die korrespondierende Entnahmeöffnungen hineinragende, Kupplungselemente aufweisen.

Der Transmitter kann auf das Ende der Schwenkachse aufsteckbar sein. Vorzugsweise ist das Aufstecken und auch ein späteres Lösen werkzeuglos möglich. Die Aufsteckbewegung auf das Ende der Schwenkachse erfolgt beispielsweise in axialer Richtung der Schwenkachse.

Ferner kann ein das besagte Ende der Schwenkachse umfassender, vorzugsweise außerhalb des Gehäuses angeordneter, Adapter vorgesehen sein.

Der Adapter kann eine, vorzugsweise nach Art einer Hülse ausgebildete, Ausnehmung zur Aufnahme des Endes der Schwenkachse aufweisen. Zur Fixierung des Adapters gegenüber dem Ende der Schwenkachse kann entweder das Ende der Schwenkachse eine Rastnase aufweisen, die in der Fixierposition mit einer Rastnut in dem Adapter zusammenwirkt, oder aber das Ende der Schwenkachse kann eine Rastnut aufweisen, in die in der Fixierposition ein an dem Adapter vorgesehene Rastnase eingreift.

Zum Lösen der Fixierverbindung zwischen dem Adapter und der Schwenkachse kann die Ausnehmung zumindest im Bereich der Rastnase/Rastnut teilweise aufweitbar sein. Beim Aufweiten wird die Einrastverbindung zwischen jeder Rastnase und der korrespondierenden Rastnut gelöst, so dass dann der Adapter abgenommen werden kann.

Die Hülse kann im Bereich der Rastnase/Rastnut in axialer Richtung gesehen wenigstens bereichsweise geschlitzt ausgebildet sein. Die schlitzförmige Ausbildung erleichtert das Aufweiten und damit das Abnehmen des Adapters.

Der Transmitter ist drehfest an dem Ende der Schwenkachse befestigt. Bei einer solchen Ausgestaltung macht der Transmitter die Drehbewegung der Schwenkachse mit, d. h. der Transmitter dreht mit.

In einer nicht zur Erfindung gehörenden Alternative kann der Transmitter drehbar gegenüber der Schwenkachse an dem Ende der Schwenkachse angeordnet sein. Bei einer solchen Ausgestaltung bleibt die Ausrichtung des Transmitters gegenüber dem Gehäuse in jeder Stellung des Klappenblattes unverändert. Bei einer solchen Ausgestaltung ist der Transmitter beispielsweise über flexible Druckschläuche mit den Messstellen verbunden.

Die Schwenkachse kann zumindest in dem Teilbereich, der sich von außerhalb des Gehäuses durch die Gehäuseöffnung nach innerhalb des Gehäuses erstreckt, vorzugsweise zumindest in dem Teilbereich, der sich von dem von außerhalb des Gehäuses zugänglichen Ende bzw. der sich von dem außenseitig aus dem Gehäuse hinausragenden Ende bis jenseits der angrenzenden Gehäuseöffnung erstreckt, als Hohlachse ausgebildet sein. Es ist selbstverständlich auch denkbar, dass die Schwenkachse über die komplette Länge als Hohlachse ausgebildet ist, wobei dann vorzugsweise eines der beiden Enden verschlossen ausgebildet ist.

Bei einer solchen Ausgestaltung kann die Schwenkachse in dem Bereich, in dem sie als Hohlachse ausgebildet ist, zur Durchführung zumindest einer Druckleitung, vorzugsweise beider Druckleitungen, ausgebildet sein oder aber die Schwenkachse kann in dem Bereich, in dem sie als Hohlachse ausgebildet ist, zumindest eine Druckleitung, vorzugsweise beide Druckleitungen, selber bilden. Sofern die Hohlachse selbst beispielsweise beide Druckleitungen bildet, befindet sich in der Hohlachse eine sich in axialer Richtung erstreckende Trennwandung, die den Hohlraum der Hohlachse in zwei luftdicht voneinander abgetrennte, vorzugsweise gleich große, Hohlraumteilbereiche unterteilt.

Zum Verschwenken des Klappenblattes kann ein mit dem Klappenblatt mittelbar oder unmittelbar verbundener, vorzugsweise außerhalb des Gehäuses angeordneter, Antrieb vorgesehen sein. Vorzugsweise ist die Verbindung zwischen dem Klappenblatt und dem Antrieb derart, dass der Antrieb bei der Montage nur in einer Position mit dem Klappenblatt verbunden werden kann. In diesem Fall bedarf es keiner Abstimmung mehr zwischen der Stellung des Antriebs und der Stellung des Klappenblattes.

Das mittelbar bzw. das unmittelbar mit dem Antrieb zusammenwirkende Ende der Schwenkachse kann als Zahnkranz ausgebildet sein. Bei einer solchen Ausgestaltung bietet es sich an, wenn der Antrieb über ein innenverzahntes Rad mit der Schwenkachse verbunden ist. Das innenverzahnte Rad kann beispielsweise Bestandteil eines Getriebes sein. Bei der Montage muss das innenverzahnte Rad lediglich auf das als Zahnkranz ausgebildete Ende der Schwenkachse aufgesteckt werden.

Das mittelbar bzw. das unmittelbar mit dem Antrieb zusammenwirkende Ende der Schwenkachse kann aber auch eine andere Ausgestaltung, nämlich eine vom Kreis abweichende Form aufweisen, insbesondere als Vierkant ausgebildet sein. Sofern beispielsweise die Schwenkachse über einen Hebel mit dem Antrieb verbunden ist, weist der Hebel eine mit dem Ende der Schwenkachse korrespondierende Ausnehmung auf, in die das Ende der Schwenkachse geführt ist.

Der Transmitter kann mit einer, vorzugsweise auf der Außenseite des Gehäuses angeordneten, Regeleinrichtung verbunden sein.

Die Regeleinrichtung kann Bestandteil des Antriebes sein. Dann ist die Regeleinrichtung in den Antrieb integriert. Die Kombination einer in einen Antrieb integrierten Regeleinrichtung wird auch als Kompaktregler bezeichnet. Ein Kompaktregler übernimmt damit die Funktionen sowohl eines Antriebes als auch eines Reglers, d. h. der Regeleinrichtung.

Die Einrichtung kann eine außenseitig an dem Gehäuse montierbare, vorzugsweise aufsteckbare oder anklipsbare, Einheit aufweisen, in der der Transmitter und/oder der Adapter und/oder der Antrieb und/oder ein zwischen der Schwenkachse und dem Antrieb angeordnetes Getriebe und/oder die Regeleinrichtung angeordnet ist (sind). Sofern die Einheit beispielsweise aufsteckbar oder anklipsbar ist, ist eine werkzeuglose Montage und auch Demontage möglich. Bei der Einheit kann es sich um ein, beispielsweise aus einem Unterteil und aus einem Oberteil bestehendes, Gehäuse handeln, in dem der Transmitter und/oder der Adapter und/oder der Antrieb und/oder ein zwischen der Schwenkachse und dem Antrieb angeordnetes Getriebe und/oder die Regeleinrichtung angeordnet ist (sind). Hierdurch ist beispielsweise eine einfache Montage möglich. So kann zunächst vor Ort das Gehäuse mit dem darin angeordneten Klappenblatt an ein gebäudeseitiges Lüftungssystem angeschlossen werden. Für eine anschließende Inbetriebnahme muss lediglich die Einheit, in der vorzugsweise sämtliche vorgenannten Bauteile bereits werkseitig angebracht und auch bereits untereinander verbunden sind, so dass eine Kommunikation möglich ist, beispielsweise mittels Klipse an der Außenseite des Gehäuses angebracht werden. Damit kann die Einheit leicht von der "Grundeinheit" bestehend aus dem Gehäuse, dem Klappenblatt und der Schwenkachse getrennt werden. Dies ermöglicht z. B. einen einfachen einhändigen Austausch eines Antriebs, oder die Reinigung der Hohlkammern des Klappenblattes über die freigelegten Leitungen der Hohlachse.

Die Einheit kann eine Entriegelungseinrichtung zum Lösen der Fixierverbindung zwischen dem Adapter und der Schwenkachse aufweisen. Dies ermöglicht eine einfache und schnelle Demontage der Einheit von dem Gehäuse. Durch das Aktivieren der Entriegelungseinrichtung wird die Fixierverbindung zwischen dem Adapter und der Schwenkachse gelöst, so dass die Einheit abgenommen werden kann.

Die Entriegelungseinrichtung kann als Drückknopf, der an dem mit der Hülse zusammenwirkenden Ende zumindest eine konisch zulaufende Fläche aufweist, ausgebildet sein, so dass bei Kontakt mit der Hülse die Hülse bei weiterer axialer Verlagerung des Drückknopfes im Bereich der Rastnase/Rastnut zumindest teilweise aufgeweitet wird. Das mit der Hülse zusammenwirkende Ende des Drückknopfes kann beispielsweise als Kegelstumpf ausgebildet sein. Der Drückknopf ist vorzugsweise von außerhalb der Einheit zugänglich, so dass ohne ein Öffnen der Einheit eine Montage und eine Demontage der Einheit von dem Gehäuse möglich ist.

Es bietet sich an, wenn innerhalb und/oder außerhalb des Gehäuses ein mit dem Klappenblatt und/oder mit der Schwenkachse mittelbar oder unmittelbar verbundenes und sich entsprechend der Bewegung des Klappenblattes ebenfalls bewegendes Anzeigeelement vorgesehen ist, welches zur Sichtkontrolle der Stellung des Klappenblattes von außerhalb des Gehäuses frei sichtbar angeordnet ist. Damit kann aufgrund der von außen ablesbaren Stellung des Anzeigeelementes auf die Stellung des Klappenblattes geschlossen werden, auch wenn das Klappenblatt selbst von außerhalb des Gehäuses nicht sichtbar ist.

Das Anzeigeelement kann beispielsweise als, insbesondere auf der Entriegelungseinrichtung angebrachte, Markierung ausgebildet sein. Bei der Markierung kann es sich beispielsweise um eine Einkerbung in einem Bauteil handeln, das mit dem Klappenblatt mitdreht und von außen sichtbar ist.

Dabei können zwei Messstellen zur Bestimmung des Volumenstroms eines gasförmigen, in dem Gehäuse strömenden Mediums M vorgesehen sein, wobei das Klappenblatt auf seinen beiden Klappenflächen jeweils zumindest eine Hohlkammer aufweist, wobei jede Hohlkammer mit zumindest einer Entnahmestelle, vorzugsweise mit einer Vielzahl an nach Art einer Perforation ausgebildeten Entnahmestellen, versehen ist und wobei die eine Messstelle mit der einen Hohlkammer auf der einen Klappenfläche und die andere Messstelle mit der anderen Hohlkammer auf der anderen Klappenfläche verbunden sind. Bei er solchen Ausgestaltung ermöglicht die lufttechnische Einrichtung auch bei sehr geringen Volumenströmen die Bestimmung eines hohen Differenzdruckes und damit eine hinreichende Regelgenauigkeit.

Im Folgenden werden in den Zeichnungen dargestellte Ausführungsbeispiele der Erfindung erläutert. Es zeigen:
- Fig. 1: einen Schnitt durch eine lufttechnische Einrichtung mit einem stark vereinfacht dargestellten Transmitter,
- Fig. 2: einen Schnitt durch eine lufttechnische Einrichtung ohne einen Transmitter und ohne einen Antrieb,
- Fig. 3: einen Schnitt durch eine alternative Ausgestaltung einer lufttechnischen Einrichtung und
- Fig. 4: einen Schnitt durch eine alternative Ausgestaltung einer lufttechnischen Einrichtung.

In allen Figuren werden für gleiche bzw. gleichartige Bauteile übereinstimmende Bezugszeichen verwendet.

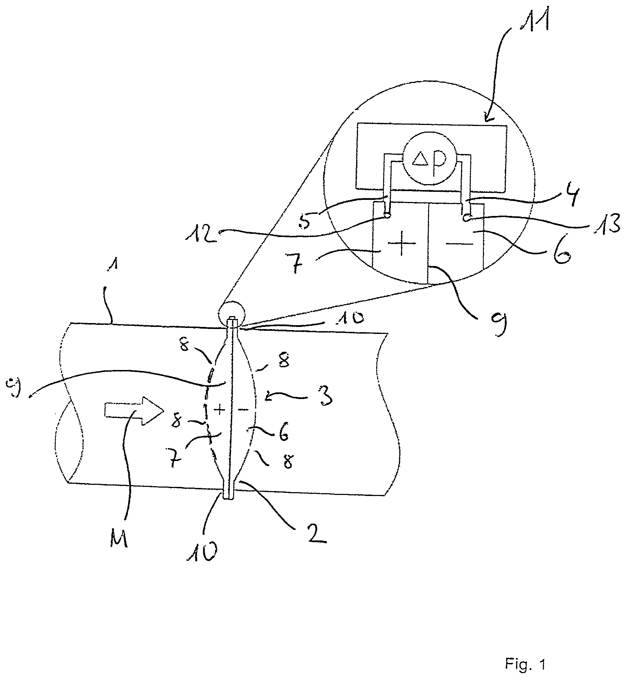

Die Fig. 1 bis 4 zeigen drei Ausgestaltungen einer lufttechnischen Einrichtung zur Verwendung in einer klimatechnischen Anlage. Jede lufttechnische Einrichtung weist ein einen runden Strömungsquerschnitt aufweisendes Gehäuse 1, in dem ein um eine Schwenkachse 2 schwenkbar gelagertes sowie zwei Klappenflächen aufweisendes Klappenblatt 3 vorgesehen ist, sowie eine Vorrichtung mit zwei Messstellen 4, 5 zur Bestimmung des Volumenstroms eines gasförmigen, in dem Gehäuse 1 strömenden Mediums M auf.

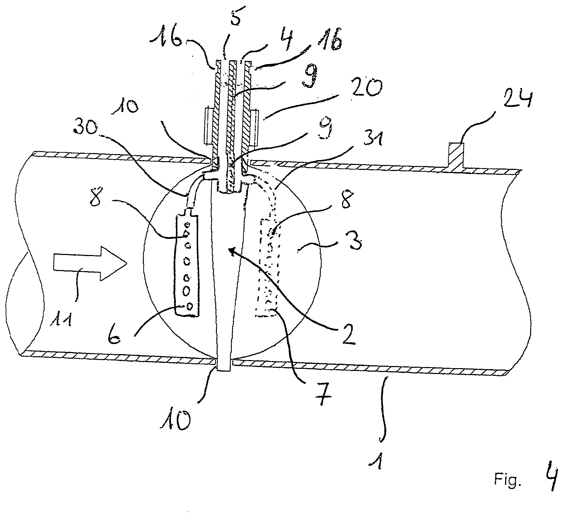

Das Klappenblatt 3 weist auf seinen beiden Klappenflächen jeweils eine Hohlkammer 6, 7 auf. Bei dem Ausführungsbeispiel nach Fig. 1 erstreckt sich die Hohlkammer 6, 7 über die komplette jeweilige Klappenfläche. In Fig. 4 ist eine Ausgestaltung dargestellt, bei dem jede Hohlkammer 6, 7 länglich ausgebildet und parallel zur Schwenkachse 2 angeordnet ist. Die betreffende Hohlkammer 6, 7 kann beispielsweise in dem Klappenblatt 3 integriert sein. Es ist aber auch durchaus möglich, dass jede Hohlkammer 6, 7 auf die Oberfläche des Klappenblattes 3 aufgesetzt oder in einem Abstand zu der Oberfläche des Klappenblattes 3 angeordnet ist.

Jede Hohlkammer 6, 7 ist mit einer Vielzahl an nach Art einer Perforation ausgebildeten Entnahmestellen 8 versehen. In Fig. 1 sind die Entnahmestellen 8 als Ausnehmungen ausgebildet. Wie den Figuren zu entnehmen ist, weist das Klappenblatt 3 nach Fig. 1 in der Seitenansicht gesehen eine in etwa linsenförmige Ausgestaltung auf.

Die eine Messstelle 4 ist mit der einen Hohlkammer 6 auf der einen Klappenfläche und die andere Messstelle 5 mit der anderen Hohlkammer 7 auf der anderen Klappenfläche verbunden. Bei dem in den Fig. 1 bis 3 dargestellten Ausführungsbeispiel ist die Schwenkachse 2 als Hohlachse ausgebildet. In der Hohlachse befindet sich eine in axialer Richtung erstreckende Trennwandung 9, die den Hohlraum der Hohlachse in zwei luftdicht voneinander abgetrennte, vorzugsweise gleich große, Hohlraumteilbereiche unterteilt.

In Fig. 4 ist eine Variante dargestellt, bei der die Schwenkachse 2 nur in einem Teilbereich als Hohlachse ausgebildet ist. Der als Hohlachse ausgebildete Teilbereich der Schwenkachse 2 erstreckt sich von dem aus dem Gehäuse 1 hinausragenden Ende gesehen bis in Richtung des gegenüberliegenden Endes der Schwenkachse 2 gesehen hinter die Gehäuseöffnung 10 und damit in den Bereich der Schwenkachse 2, der sich innerhalb des Gehäuses 1 befindet. Damit ist bei der Ausgestaltung nach Fig. 4 die Schwenkachse 2 lediglich in dem Teilbereich, der sich von dem außenseitig aus dem Gehäuse 1 hinausragenden Ende bis jenseits der angrenzenden Gehäuseöffnung 10 erstreckt, als Hohlachse ausgebildet ist. Über Leitungen 30, 31 ist die jeweilige Hohlkammer 6, 7 mit dem jeweiligen Hohlraumteilbereich verbunden.

Bei den in den Fig. 1 bis 4 dargestellten Ausführungsbeispielen ragen beide Enden der Schwenkachse 2 durch jeweils eine in dem Gehäuse 1 befindliche Gehäuseöffnung 10 außenseitig aus dem Gehäuse 1 hinaus. In allen dargestellten Ausführungsbeispielen bildet die Hohlachse im Bereich des Durchgangs durch das Gehäuse 1 beide Druckleitungen selber. Die beiden Messstellen 4, 5 sind mit einem Transmitter 11 verbunden. Der Transmitter 11 ist dabei direkt auf eines der beiden Enden der Schwenkachse 2 aufgesteckt. Jede Messstelle 4, 5 wird durch eine im Bereich der Stirnseite des besagten Endes der Schwenkachse 2 angeordnete Entnahmeöffnung gebildet. Der Transmitter 11 weist zwei, rohrförmig ausgebildete und in der Montageposition endseitig in die Entnahmeöffnungen hineinragende Kupplungselemente 12, 13 auf.

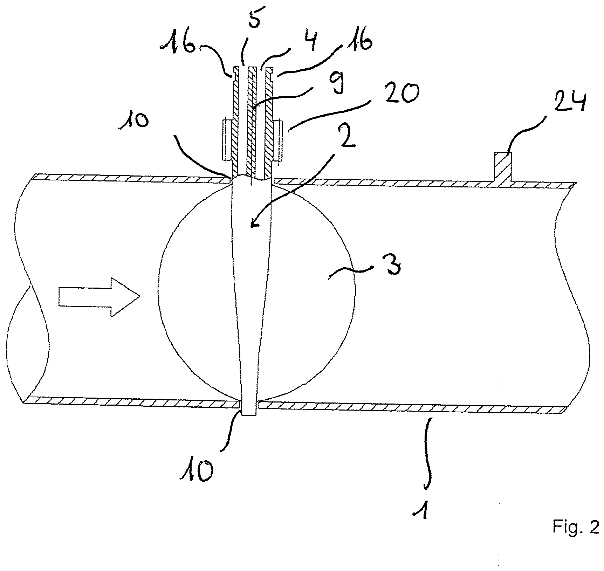

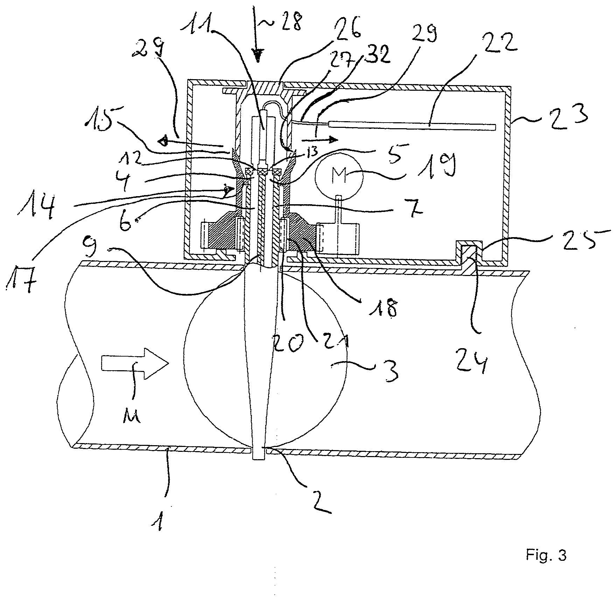

In den Fig. 2 bis 4 ist eine Ausgestaltung dargestellt, bei dem ein das besagte Ende der Schwenkachse 2 umfassender und außerhalb des Gehäuses 1 angeordneter Adapter 14 vorgesehen ist. Der Adapter 14 weist eine, nach Art einer Hülse 15 ausgebildete, Ausnehmung zur Aufnahme des Endes der Schwenkachse 2 auf. Zur Fixierung des Adapters 14 gegenüber dem Ende der Schwenkachse 2 weist das Ende der Schwenkachse 2 zwei gegenüberliegende Rastnuten 16 auf, die in der in Fig. 3 dargestellten Fixierposition mit zwei gegenüberliegenden Rastnasen 17 des Adapters 14 zusammenwirken.

Zum Lösen der Fixierverbindung zwischen dem Adapter 14 und der Schwenkachse 2 ist die Ausnehmung zumindest im Bereich der Rastnasen 17 in Richtung der Pfeile 29 teilweise aufweitbar. Hierzu ist die Hülse 15 im Bereich der Rastnasen 17 in axialer Richtung gesehen zumindest im Endbereich geschlitzt ausgebildet.

Bei dem dargestellten Ausführungsbeispiel ist der Transmitter 11 drehfest an dem Ende der Schwenkachse 2 befestigt. Damit macht der Transmitter 11 die Drehbewegung des Klappenblattes 3 mit.

Zum Verschwenken des Klappenblattes 3 ist ein über ein Getriebe 18 mit dem Klappenblatt 3 verbundener und außerhalb des Gehäuses 1 angeordneter Antrieb 19 vorgesehen. Das mit dem Antrieb 19 zusammenwirkende Ende der Schwenkachse 2 ist als Zahnkranz 20 ausgebildet. Das Getriebe 18 weist ein innenverzahntes Rad 21 auf. Bei der Montage muss lediglich das innenverzahnte Rad 21 auf das als Zahnkranz 20 ausgebildete Ende der Schwenkachse 2 aufgesteckt werden. Der Transmitter 11 ist mit einer, ebenfalls auf der Außenseite des Gehäuses 1 angeordneten, Regeleinrichtung 22 verbunden.

Wie Fig. 3 zu entnehmen ist, weist die Einrichtung eine außenseitig an dem Gehäuse 1 vorgesehene Einheit 23 auf. In der als Gehäuse ausgebildeten Einheit 23 ist der Transmitter 11, der Adapter 14, der Antrieb 19, das Getriebe 18 und die Regeleinrichtung 22 angeordnet. Die Einheit 23 ist beispielsweise von außen auf das Gehäuse 1 aufgesteckt oder angeklipst. Um ein Verdrehen der Einheit 23 gegenüber dem Gehäuse 1 zu verhindern, ist eine stiftartige Verdrehsicherung 24 vorgesehen, die in eine entsprechende Ausnehmung 25 in der Einheit 23 eingreift.

Zusätzlich weist die Einheit 23 eine Entriegelungseinrichtung 26 zum Lösen der Fixierverbindung zwischen dem Adapter 14 und der Schwenkachse 2 auf. Die Entriegelungseinrichtung 26 ist als Drückknopf ausgebildet, der an dem mit der Hülse 15 zusammenwirkenden Ende eine konisch zulaufende Fläche 27 aufweist, so dass das Ende die Form eines Kegelstumpfes hat. Nach Kontakt mit der Hülse 15 wird die Hülse 15 bei weiterer axialer Verlagerung des Drüccknopfes in Richtung des Pfeils 28 im Bereich der Rastnasen 17 aufgeweitet. Zum Lösen der Einheit 23 muss lediglich der Drückknopf gedrückt werden. Hierdurch löst sich die Fixierverbindung und die Einheit 23 kann vom Gehäuse 1 werkzeuglos entfernt werden.

In den dargestellten Ausführungsbeispielen ist die Schwenkachse 2 in das Klappenblatt 3 eingesteckt. Dies erlaubt eine einfache Montage. Bei der Montage wird das Klappenblatt 3 in dem Gehäuse 1 in der richtigen Position gehalten und anschließend von außen die Schwenkachse 2 durch das Gehäuse 1 in das Klappenblatt 3 gesteckt. Das Klappenblatt 3 ist insoweit drehfest auf der Schwenkachse 2 angeordnet. Selbstverständlich ist auch eine einteilige Anordnung von Klappenblatt 3 und Schwenkachse 2 möglich. Auch ist es denkbar, dass die Schwenkachse 2 drehfest in dem Gehäuse 1 angeordnet ist und das Klappenblatt 3 um die Schwenkachse 2 dreht.

Bei dem beispielsweise in Fig. 3 dargestellten Ausführungsbeispiel sind der Transmitter 11 und die Regeleinrichtung 22 über eine Leitung 32 miteinander verbunden. Die elektrische Verbindung zwischen der Regeleinrichtung 22 und dem Antrieb 19 ist nicht dargestellt.

In dem dargestellten Ausführungsbeispiel handelt es sich bei der Regeleinrichtung 22 und bei dem Antrieb 19 um separate Bauteile. Selbstverständlich ist es auch möglich, dass alternativ die Regeleinrichtung 22 Bestandteil des Antriebes 19 ist. Dann ist die Regeleinrichtung 22 in den Antrieb 19 integriert.

## Patentansprüche

1. Lufttechnische Einrichtung zur Verwendung in einer klimatechnischen Anlage mit einem, vorzugsweise einen runden oder einen viereckigen Strömungsquerschnitt aufweisenden, Gehäuse (1), mit einem um eine Schwenkachse (2) schwenkbar gelagerten sowie zwei Klappenflächen aufweisenden Klappenblatt (3), und mit einer Vorrichtung mit zumindest einer Messstelle (4, 5) zur Bestimmung des Druckes eines gasförmigen, in dem Gehäuse (1) strömenden Mediums M, wobei das Klappenblatt (3) wenigstens eine, vorzugsweise auf zumindest einer Klappenfläche angeordnete, Entnahmestelle (8) aufweist, die mit einer der zumindest einen Messstelle (4, 5) verbunden ist, **dadurch gekennzeichnet, dass**
| | |
|---|---|
| entweder | zumindest ein Ende der Schwenkachse (2) durch eine in dem Gehäuse (1) befindliche und in der Flucht der Schwenkachse (2) befindliche Gehäuseöffnung (10) von außerhalb des Gehäuses (1) zugänglich ist, wobei zumindest eine Messstelle (4, 5), vorzugsweise jede Messstelle (4, 5), mit einem Transmitter (11) verbunden ist, der an dem von außerhalb des Gehäuses (1) zugänglichen Endes der Schwenkachse (2) angeordnet und dass der Transmitter (11) drehfest an dem Ende der Schwenkachse (2) befestigt ist, |
| oder aber | zumindest ein Ende der Schwenkachse (2) durch eine in dem Gehäuse (1) befindliche Gehäuseöffnung (10) außenseitig aus dem Gehäuse (1) hinausragt, wobei zumindest eine Messstelle (4, 5), vorzugsweise jede Messstelle (4, 5), mit einem Transmitter (11) verbunden ist, der an dem aus dem Gehäuse (1) hinausragenden Ende der Schwenkachse (2) angeordnet und dass der Transmitter (11) drehfest an dem Ende der Schwenkachse (2) befestigt ist. |

2. Lufttechnische Einrichtung nach dem vorhergehenden Anspruch, **dadurch gekennzeichnet, dass** zumindest eine Messstelle (4, 5), vorzugsweise jede Messstelle (4, 5) durch eine im Bereich der Stirnseite des besagten Endes der Schwenkachse (2) angeordnete Entnahmeöffnung gebildet ist und dass der Transmitter (11) zumindest ein, vorzugsweise rohrförmig ausgebildetes und in der Montageposition endseitig in die jeweilige korrespondierende Entnahmeöffnung hineinragendes, Kupplungselement (12 bzw. 13) aufweist.

3. Lufttechnische Einrichtung nach einem der vorhergehenden Ansprüche, **dadurch gekennzeichnet, dass** der Transmitter (11) auf das Ende der Schwenkachse (2) aufsteckbar ist.

4. Lufttechnische Einrichtung nach einem der vorhergehenden Ansprüche, **dadurch gekennzeichnet, dass** ein das besagte Ende der Schwenkachse (2) umfassender, vorzugsweise außerhalb des Gehäuses (1) angeordneter, Adapter (14) vorgesehen ist.

5. Lufttechnische Einrichtung nach dem vorhergehenden Anspruch, **dadurch gekennzeichnet, dass** der Adapter (14) eine, vorzugsweise nach Art einer Hülse (15) ausgebildete, Ausnehmung zur Aufnahme des Endes der Schwenkachse (2) aufweist und dass zur Fixierung des Adapters (14) gegenüber dem Ende entweder das Ende der Schwenkachse (2) eine Rastnase (17) aufweist, die in der Fixierposition mit einer Rastnut (16) in dem Adapter (14) zusammenwirkt, oder aber dass das Ende der Schwenkachse (2) eine Rastnut (16) aufweist, in die in der Fixierposition ein an dem Adapter (14) vorgesehene Rastnase (17) eingreift.

6. Lufttechnische Einrichtung nach dem vorhergehenden Anspruch, **dadurch gekennzeichnet, dass** zum Lösen der Fixierverbindung zwischen dem Adapter (14) und der Schwenkachse (2) die Ausnehmung zumindest im Bereich der Rastnase/Rastnut (17, 16) teilweise aufweitbar ist.

7. Lufttechnische Einrichtung nach einem der Ansprüche 5 oder 6, **dadurch gekennzeichnet, dass** die Hülse (15) im Bereich der Rastnase/Rastnut (17, 16) in axialer Richtung gesehen wenigstens bereichsweise geschlitzt ausgebildet ist.

8. Lufttechnische Einrichtung nach einem der vorhergehenden Ansprüche, **dadurch gekennzeichnet, dass** die Schwenkachse (2) zumindest in dem Teilbereich, der sich von außerhalb des Gehäuses (1) durch die Gehäuseöffnung (10) nach innerhalb des Gehäuses (1) erstreckt, vorzugsweise zumindest in dem Teilbereich, der sich von dem von außerhalb des Gehäuses (1) zugänglichen Ende bzw. der sich von dem außenseitig aus dem Gehäuse (1) hinausragenden Ende bis jenseits der angrenzenden Gehäuseöffnung (10) erstreckt, als Hohlachse ausgebildet ist.

9. Lufttechnische Einrichtung nach dem vorhergehenden Anspruch, **dadurch gekennzeichnet, dass** die Schwenkachse (2) in dem Bereich, in dem sie als Hohlachse ausgebildet ist, zur Durchführung zumindest einer Druckleitung, vorzugsweise beider Druckleitungen, ausgebildet ist oder aber dass die Schwenkachse (2) in dem Bereich, in dem sie als Hohlachse ausgebildet ist, zumindest eine Druckleitung, vorzugsweise beide Druckleitungen, selber bildet.

10. Lufttechnische Einrichtung nach einem der vorhergehenden Ansprüche, **dadurch gekennzeichnet, dass** zum Verschwenken des Klappenblattes (3) ein mit dem Klappenblatt (3) mittelbar oder unmittelbar verbundener, vorzugsweise außerhalb des Gehäuses (1) angeordneter, Antrieb (19) vorgesehen ist.

11. Lufttechnische Einrichtung nach dem vorhergehenden Anspruch, **dadurch gekennzeichnet, dass** das mittelbar bzw. das unmittelbar mit dem Antrieb (19) zusammenwirkende Ende der Schwenkachse (2) als Zahnkranz (20) ausgebildet ist.

12. Lufttechnische Einrichtung nach Anspruch 10, **dadurch gekennzeichnet, dass** das mittelbar bzw. das unmittelbar mit dem Antrieb (19) zusammenwirkende Ende der Schwenkachse (2) eine vom Kreis abweichende Form aufweist, insbesondere als Vierkant ausgebildet ist.

13. Lufttechnische Einrichtung nach einem der vorhergehenden Ansprüche, **dadurch gekennzeichnet, dass** der Transmitter (11) mit einer, vorzugsweise auf der Außenseite des Gehäuses (1) angeordneten, Regeleinrichtung (22) verbunden ist.

14. Lufttechnische Einrichtung nach dem vorhergehenden Anspruch, soweit dieser auf einen der Ansprüche 10 bis 12 rückbezogen ist, **dadurch gekennzeichnet, dass** die Regeleinrichtung (22) Bestandteil des Antriebes (19) ist.

15. Lufttechnische Einrichtung nach einem der vorhergehenden Ansprüche, **dadurch gekennzeichnet, dass** die Einrichtung eine außenseitig an dem Gehäuse (1) montierbare, vorzugsweise aufsteckbare oder anklipsbare, Einheit (23) aufweist, in der der Transmitter (11) angeordnet ist.

16. Lufttechnische Einrichtung nach einem der vorhergehenden Ansprüche, soweit auf Anspruch 4 rückbezogen, **dadurch gekennzeichnet, dass** die Einrichtung eine außenseitig an dem Gehäuse (1) montierbare, vorzugsweise aufsteckbare oder anklipsbare, Einheit (23) aufweist, in der der Adapter (14) angeordnet ist.

17. Lufttechnische Einrichtung nach einem der vorhergehenden Ansprüche, soweit auf Anspruch 10 rückbezogen, **dadurch gekennzeichnet, dass** die Einrichtung eine außenseitig an dem Gehäuse (1) montierbare, vorzugsweise aufsteckbare oder anklipsbare, Einheit (23) aufweist, in der der Antrieb (19) und/oder ein zwischen der Schwenkachse (2) und dem Antrieb (19) angeordnetes Getriebe (18) angeordnet ist (sind).

18. Lufttechnische Einrichtung nach einem der vorhergehenden Ansprüche, soweit auf Anspruch 13 rückbezogen, **dadurch gekennzeichnet, dass** die Einrichtung eine außenseitig an dem Gehäuse (1) montierbare, vorzugsweise aufsteckbare oder anklipsbare, Einheit (23) aufweist, in der die Regeleinrichtung (22) angeordnet ist.

19. Lufttechnische Einrichtung nach einem der Ansprüche 15 bis 18, **dadurch gekennzeichnet, dass** die Einheit (23) eine Entriegelungseinrichtung (26) zum Lösen der Fixierverbindung zwischen dem Adapter (14) und der Schwenkachse (2) aufweist.

20. Lufttechnische Einrichtung nach dem vorhergehenden Anspruch, soweit dieser auf Anspruch 6 rückbezogen ist, **dadurch gekennzeichnet, dass** die Entriegelungseinrichtung (26) als Drückknopf, der an dem mit der Hülse (15) zusammenwirkenden Ende zumindest eine konisch zulaufende Fläche (27) aufweist, ausgebildet ist, so dass bei Kontakt mit der Hülse (15) die Hülse (15) bei weiterer axialer Verlagerung des Drückknopfes im Bereich der Rastnase/Rastnut (17, 16) zumindest teilweise aufgeweitet wird.

21. Lufttechnische Einrichtung nach einem der vorhergehenden Ansprüche, **dadurch gekennzeichnet, dass** innerhalb und/oder außerhalb des Gehäuses (1) ein mit dem Klappenblatt (3) und/oder mit der Schwenkachse (2) mittelbar oder unmittelbar verbundenes und sich entsprechend der Bewegung des Klappenblattes (3) ebenfalls bewegendes Anzeigeelement vorgesehen ist, welches zur Sichtkontrolle der Stellung des Klappenblattes (3) von außerhalb des Gehäuses (1) frei sichtbar angeordnet ist.

22. Lufttechnische Einrichtung nach dem vorhergehenden Anspruch, **dadurch gekennzeichnet, dass** das Anzeigeelement als, insbesondere auf der Entriegelungseinrichtung (26) angebrachte, Markierung ausgebildet ist.

23. Lufttechnische Einrichtung nach einem der vorhergehenden Ansprüche, **dadurch gekennzeichnet, dass** zwei Messstellen (4, 5) zur Bestimmung des Volumenstroms eines gasförmigen, in dem Gehäuse (1) strömenden Mediums M vorgesehen sind, wobei das Klappenblatt (3) auf seinen beiden Klappenflächen jeweils zumindest eine Hohlkammer (6, 7) aufweist, wobei jede Hohlkammer (6, 7) mit zumindest einer Entnahmestelle (8), vorzugsweise mit einer Vielzahl an nach Art einer Perforation ausgebildeten Entnahmestellen (8), versehen ist und wobei die eine Messstelle (4) mit der einen Hohlkammer (6) auf der einen Klappenfläche und die andere Messstelle (5) mit der anderen Hohlkammer (7) auf der anderen Klappenfläche verbunden sind.

## Claims

1. Ventilation device for use in an air conditioning system with a housing (1) exhibiting a preferably round or rectangular flow cross-section, with a flap sheet (3) which is mounted so as to pivot about a pivot axis (2), and comprises two flap surfaces, and with an apparatus with at least one measurement point (4, 5) for determining the pressure of a gaseous medium M flowing in the housing (1), wherein the flap sheet (3) comprises at least one extraction point (8), preferably arranged on at least one flap surface, which is connected to one of the at least one measurement point (4, 5), **characterised in that**
| | |
|---|---|
| either | at least one end of the pivot axis (2) is accessible from outside the housing (1) through a housing opening (10) located in the housing (1) and flush to the pivot axis (2), wherein at least one measurement point (4, 5), and preferably each measurement point (4, 5), is connected to a transmitter (11), which is arranged at the end of the pivot axis (2) which is accessible from outside the housing (1) and that the transmitter (11) is secured at the end of the pivot axis (2) in a torsionally-resistant manner, |
| or | at least one end of the pivot axis (2) projects on the outside, through a housing opening (10) located in the housing (1), out of the housing (1), wherein at least one measurement point (4, 5), and preferably each measurement point (4, 5), is connected to a transmitter (11), which is arranged at the end of the pivot axis (2) projecting out of the housing (1) and that the transmitter (11) is secured at the end of the pivot axis (2) in a torsionally-resistant manner. |

2. Ventilation device according to the preceding claim, **characterised in that** at least one measurement point (4, 5), and preferably each measurement point (4, 5) is formed by an extraction opening arranged in the region of the face side of the said end of the pivot axis (2), and that the transmitter (11) comprises at least one coupling element (12 or 13 respectively), preferably configured as tubular, and which in the installation position projects on the end side into the respective corresponding extraction opening.

3. Ventilation device according to any one of the preceding claims, **characterised in that** the transmitter (11) can be attached onto the end of the pivot axis (2).

4. Ventilation device according to any one of the preceding claims, **characterised in that** an adapter (14) is provided, which encompasses the said end of the pivot axis (2) and is preferably arranged outside the housing (1).

5. Ventilation device according to the preceding claim, **characterised in that** the adapter (14) comprises a cut-out, preferably formed in the manner of a sleeve (15), to accommodate the end of the pivot axis (2), and that, in order to fix the adapter (14) opposite the end, either the pivot axis (2) comprises an engagement nose (17), which in the fixing position interacts with an engagement slot (16) in the adapter (14), or the end of the pivot axis (2) comprises an engagement slot (16), into which, in the fixing position, an engagement nose (17) provided at the adapter (14) engages.

6. Ventilation device according to the preceding claim, **characterised in that** in order to release the fixed connection between the adapter (14) and the pivot axis (2), the cut-out is at least partially capable of expanding in the region of the engagement nose/engagement slot (17, 16).

7. Ventilation device according to any one of claims 5 or 6, **characterised in that** the sleeve (15) in the region of the engagement nose/engagement slot (17, 16), seen in the axial direction, is configured at least as partially slotted.

8. Ventilation device according to any one of the preceding claims, **characterised in that** the pivot axis (2) is configured as a hollow axis, at least in the part region which extends from outside the housing (1) through the housing opening (10) into the interior of the housing (1), and preferably at least in the part region which extends from the end accessible from outside the housing (1) or, respectively, which extends from the end projecting, on the outside, out of the housing (1), as far as the far side of the adjacent housing opening (10).

9. Ventilation device according to the preceding claim, **characterised in that** the pivot axis (2) is configured in the region in which it is formed as a hollow axis so as to allow the passage of at least one pressure line, and preferably of both pressure lines, or that the pivot axis (2) itself forms at least one pressure line, and preferably both pressure lines, in the region in which it is configured as a hollow axis.

10. Ventilation device according to any one of the preceding claims, **characterised in that,** in order to pivot the flap sheet (3), a drive unit (19) is provided, which is connected indirectly or directly to the flap sheet (3) and is preferably arranged outside the housing (1).

11. Ventilation device according to any one of the preceding claims, **characterised in that** the end of the pivot axis (2) which interacts indirectly or directly with the drive unit (19) is configured as a toothed rim (20).

12. Ventilation device according to claim 10, **characterised in that** the end of the pivot axis (2) which interacts indirectly or directly with the drive (19) exhibits a shape which deviates from a circle, and in particular is configured as a rectangle.

13. Ventilation device according to any one of the preceding claims, **characterised in that** the transmitter (11) is connected to a regulating device (22), preferably arranged on the outside of the housing (1).

14. Ventilation device according to the preceding claim, inasmuch as that refers back to one of claims 10 to 12, **characterised in that** the regulating device (22) is a constituent part of the drive (19).

15. Ventilation device according to any one of the preceding claims, **characterised in that** the device comprises a unit (23), which can be mounted on the outside on the housing (1), preferably capable of being attached or clipped on, arranged in which is the transmitter (11).

16. Ventilation device according to any one of the preceding claims, inasmuch as they refer back to claim 4, **characterised in that** the device comprises a unit (23), which can be mounted on the outside on the housing (1), preferably capable of being attached or clipped on, arranged in which is the adapter (14).

17. Ventilation device according to any one of the preceding claims, inasmuch as they refer back to claim 10, **characterised in that** the device comprises a unit (23), which can be mounted on the outside on the housing (1), preferably capable of being attached or clipped on, arranged in which is (are) the drive (19) and/or a gear unit (18) arranged between the pivot axis (2) and the drive (19).

18. Ventilation device according to any one of the preceding claims, inasmuch as they refer back to claim 13, **characterised in that** the device comprises a unit (23), which can be mounted on the outside on the housing (1), preferably capable of being attached or clipped on, arranged in which is the regulating device (22).

19. Ventilation device according to any one of claims 15 to 18, **characterised in that** the unit (23) comprises a detaching device (26) for releasing the fixing connection between the adapter (14) and pivot axis (2).

20. Ventilation device according to the preceding claim, inasmuch as this refers back to claim 6, **characterised in that** the detaching device (26) is configured as a pushbutton, which, at the end which interacts with the sleeve (15), comprises at least one surface (27) running into a conical shape, such that, on contact with the sleeve (15), with the further axial displacement of the pushbutton in the region of the engagement nose/engagement slot (17, 16), the sleeve (15) is at least partially further widened.

21. Ventilation device according to any one of the preceding claims, **characterised in that,** inside and/or outside the housing (1), a display element is provided, which is connected directly or indirectly with the flap sheet (3) and/or with the pivot axis (2), and which likewise moves in accordance with the movement of the flap sheet (3), and which is arranged so as to be freely visible from outside the housing (1) in order to carry out a visual inspection of the position of the flap sheet (3).

22. Ventilation device according to the preceding claim, **characterised in that** the display element is configured as a marking, in particular arranged on the detaching device (26).

23. Ventilation device according to any one of the preceding claims, **characterised in that** two measuring points (4, 5) are provided in order to determine the volume flow of a gaseous medium M, flowing in the housing (1), wherein the flap sheet (3) comprises on its two flap surfaces in each case at least one hollow chamber (6, 7), wherein each hollow chamber (6, 7) is provided with at least one extraction point (8), and preferably with a plurality of extraction points (8), configured in the form of a perforation, and wherein the one measuring point (4) is connected to the one hollow chamber (6) on the one flap surface, and the other measuring point (5) is connected to the other hollow chamber (7) on the other flap surface.

## Revendications

1. Appareil aéraulique destiné à être utilisé dans une unité de climatisation, muni d'un boîtier (1), de préférence présentant une section transversale d'écoulement ronde ou quadrangulaire, muni d'une lame de clapet (3) montée en pivotement autour d'un axe de pivotement (2) et comprenant deux surfaces de clapet, et muni d'un dispositif muni d'au moins un emplacement de mesure (4, 5) pour la détermination de la pression d'un milieu gazeux M, s'écoulant dans le boîtier (1), la lame de clapet (3) comprenant au moins un emplacement de soutirage (8), de préférence agencé sur au moins une surface de clapet, qui est relié avec l'un des au moins un emplacement de mesure (4, 5), **caractérisé en ce que**
| | |
|---|---|
| soit | au moins une extrémité de l'axe de pivotement (2) est accessible depuis l'extérieur du boîtier (1) au travers d'une ouverture de boîtier (10) se trouvant dans le boîtier (1) et se trouvant dans l'alignement de l'axe de pivotement (2), au moins un emplacement de mesure (4, 5), de préférence chaque emplacement de mesure (4, 5), étant relié avec un transmetteur (11), qui est agencé à l'extrémité, accessible depuis l'extérieur du boîtier (1), de l'axe de pivotement (2) et **en ce que** le transmetteur (11) est fixé de manière immobile en rotation à l'extrémité de l'axe de pivotement (2), |
| ou soit | au moins une extrémité de l'axe de pivotement (2) dépasse du boîtier (1) du côté extérieur au travers d'une ouverture de boîtier (10) se trouvant dans le boîtier (1), au moins un emplacement de mesure (4, 5), de préférence chaque emplacement de mesure (4, 5), étant relié avec un transmetteur (11), qui est agencé à l'extrémité, dépassant du boîtier (1), de l'axe de pivotement (2) et **en ce que** le transmetteur (11) est fixé de manière immobile en rotation à l'extrémité de l'axe de pivotement (2). |

2. Appareil aéraulique selon la revendication précédente, **caractérisé en ce qu'**au moins un emplacement de mesure (4, 5), de préférence chaque emplacement de mesure (4, 5), est formé par une ouverture de soutirage agencée dans la zone du côté frontal de ladite extrémité de l'axe de pivotement (2), et **en ce que** le transmetteur (11) comprend au moins un élément d'accouplement (12 ou 13), de préférence configuré sous forme tubulaire et pénétrant dans la position de montage du côté de l'extrémité dans l'ouverture de soutirage correspondante respective.

3. Appareil aéraulique selon l'une quelconque des revendications précédentes, **caractérisé en ce que** le transmetteur (11) peut être emboîté sur l'extrémité de l'axe de pivotement (2).

4. Appareil aéraulique selon l'une quelconque des revendications précédentes, **caractérisé en ce qu'**un adaptateur (14), comprenant ladite extrémité de l'axe de pivotement (2), de préférence agencé à l'extérieur du boîtier (1), est prévu.

5. Appareil aéraulique selon la revendication précédente, **caractérisé en ce que** l'adaptateur (14) comprend un évidement, de préférence configuré à la façon d'une douille (15), destiné à recevoir l'extrémité de l'axe de pivotement (2), et **en ce que**, pour la fixation de l'adaptateur (14) par rapport à l'extrémité, soit l'extrémité de l'axe de pivotement (2) comprend un bec d'encliquetage (17), qui coopère dans la position de fixation avec une rainure d'encliquetage (16) dans l'adaptateur (14), soit l'extrémité de l'axe de pivotement (2) comprend une rainure d'encliquetage (16), dans laquelle un bec d'encliquetage (17) prévu sur l'adaptateur (14) s'engage dans la position de fixation.

6. Appareil aéraulique selon la revendication précédente, **caractérisé en ce que,** pour le détachement de la liaison de fixation entre l'adaptateur (14) et l'axe de pivotement (2), l'évidement peut être au moins partiellement élargi au moins dans la zone du bec d'encliquetage/rainure d'encliquetage (17, 16).

7. Appareil aéraulique selon l'une quelconque des revendications 5 ou 6, **caractérisé en ce que** la douille (15) est configurée au moins en zones sous forme fendue dans la zone du bec d'encliquetage/rainure d'encliquetage (17, 16), tel que vu dans la direction axiale.

8. Appareil aéraulique selon l'une quelconque des revendications précédentes, **caractérisé en ce que** l'axe de pivotement (2) est configuré sous la forme d'un axe creux au moins dans la zone partielle, qui s'étend depuis l'extérieur du boîtier (1) au travers de l'ouverture de boîtier (10) jusqu'à l'intérieur du boîtier (1), de préférence au moins dans la zone partielle, qui s'étend depuis l'extrémité accessible depuis l'extérieur du boîtier (1) ou l'extrémité dépassant du boîtier (1) du côté extérieur jusqu'au-delà de l'ouverture de boîtier adjacente (10).

9. Appareil aéraulique selon la revendication précédente, **caractérisé en ce que** l'axe de pivotement (2) est configuré, dans la zone dans laquelle il est configuré sous la forme d'un axe creux, pour le passage d'au moins une conduite sous pression, de préférence de deux conduites sous pression, ou bien **en ce que** l'axe de pivotement (2) forme lui-même, dans la zone dans laquelle il est configuré sous la forme d'un axe creux, au moins une conduite sous pression, de préférence deux conduites sous pression.

10. Appareil aéraulique selon l'une quelconque des revendications précédentes, **caractérisé en ce qu'**un entraînement (19) relié indirectement ou directement avec la lame de clapet (3), de préférence agencé à l'extérieur du boîtier (1), est prévu pour le pivotement de la lame de clapet (3).

11. Appareil aéraulique selon la revendication précédente, **caractérisé en ce que** l'extrémité de l'axe de pivotement (2) coopérant indirectement ou directement avec l'entraînement (19) est configurée sous la forme d'une couronne dentée (20).

12. Appareil aéraulique selon la revendication 10, **caractérisé en ce que** l'extrémité de l'axe de pivotement (2) coopérant indirectement ou directement avec l'entraînement (19) présente une forme différente d'un cercle, notamment est configurée sous la forme d'un quadrilatère.

13. Appareil aéraulique selon l'une quelconque des revendications précédentes, **caractérisé en ce que** le transmetteur (11) est relié avec un appareil de régulation (22), de préférence agencé sur le côté extérieur du boîtier (1).

14. Appareil aéraulique selon la revendication précédente, dans la mesure où celle-ci se rapporte à l'une quelconque des revendications 10 à 12, **caractérisé en ce que** l'appareil de régulation (22) est un constituant de l'entraînement (19).

15. Appareil aéraulique selon l'une quelconque des revendications précédentes, **caractérisé en ce que** l'appareil comprend une unité (23) pouvant être montée du côté extérieur sur le boîtier (1), de préférence pouvant être emboîtée ou pouvant être clipsée, dans laquelle le transmetteur (11) est agencé.

16. Appareil aéraulique selon l'une quelconque des revendications précédentes, dans la mesure où elles se rapportent à la revendication 4, **caractérisé en ce que** l'appareil comprend une unité (23) pouvant être montée du côté extérieur sur le boîtier (1), de préférence pouvant être emboîtée ou pouvant être clipsée, dans laquelle l'adaptateur (14) est agencé.

17. Appareil aéraulique selon l'une quelconque des revendications précédentes, dans la mesure où elles se rapportent à la revendication 10, **caractérisé en ce que** l'appareil comprend une unité (23) pouvant être montée du côté extérieur sur le boîtier (1), de préférence pouvant être emboîtée ou pouvant être clipsée, dans laquelle l'entraînement (19) et/ou un engrenage (18) agencé entre l'axe de pivotement (2) et l'entraînement (19) est (sont) agencé(s).

18. Appareil aéraulique selon l'une quelconque des revendications précédentes, dans la mesure où elles se rapportent à la revendication 13, **caractérisé en ce que** l'appareil comprend une unité (23) pouvant être montée du côté extérieur sur le boîtier (1), de préférence pouvant être emboîtée ou pouvant être clipsée, dans laquelle l'appareil de régulation (22) est agencé.

19. Appareil aéraulique selon l'une quelconque des revendications 15 à 18, **caractérisé en ce que** l'unité (23) comprend un appareil de déblocage (26) pour le détachement de la liaison de fixation entre l'adaptateur (14) et l'axe de pivotement (2).

20. Appareil aéraulique selon la revendication précédente, dans la mesure où celle-ci se rapporte à la revendication 6, **caractérisé en ce que** l'appareil de déblocage (26) est configuré sous la forme d'un bouton-poussoir, qui comprend sur l'extrémité coopérant avec la douille (15) au moins une surface (27) qui se termine coniquement, de telle sorte que lors d'un contact avec la douille (15), la douille (15) soit au moins partiellement élargie dans la zone du bec d'encliquetage/rainure d'encliquetage (17, 16) lors d'un déplacement axial supplémentaire du bouton-poussoir.

21. Appareil aéraulique selon l'une quelconque des revendications précédentes, **caractérisé en ce qu'**un élément d'affichage relié indirectement ou directement avec la lame de clapet (3) et/ou avec l'axe de pivotement (2) et se déplaçant également conformément au mouvement de la lame de clapet (3) est prévu à l'intérieur et/ou à l'extérieur du boîtier (1), qui est agencé sous forme librement visible depuis l'extérieur du boîtier (1) pour le contrôle visuel de la position de la lame de clapet (3) .

22. Appareil aéraulique selon la revendication précédente, **caractérisé en ce que** l'élément d'affichage est configuré sous la forme d'un marquage, notamment disposé sur l'appareil de déblocage (26).

23. Appareil aéraulique selon l'une quelconque des revendications précédentes, **caractérisé en ce que** deux emplacements de mesure (4, 5) pour la détermination du débit volumique d'un milieu gazeux M s'écoulant dans le boîtier (1) sont prévus, la lame de clapet (3) comprenant sur ses deux surfaces de clapet respectivement au moins une chambre creuse (6, 7), chaque chambre creuse (6, 7) étant munie d'au moins un emplacement de soutirage (8), de préférence d'une pluralité d'emplacements de soutirage (8) configurés à la façon d'une perforation, et un emplacement de mesure (4) étant relié avec une chambre creuse (6) sur une surface de clapet et l'autre emplacement de mesure (5) étant relié avec l'autre chambre creuse (7) sur l'autre surface de clapet.
